# EUROPÄISCHE PATENTSCHRIFT

(11) **EP 3 415 313 B1**
(45) Veröffentlichungstag und Bekanntmachung des Hinweises auf die Patenterteilung: **30.09.2020**
(21) Anmeldenummer: 18177244.3
(22) Anmeldetag: 12.06.2018
(51) Int. Cl.: B32B 41/00, B42D 25/45, B29C 65/02, G01N 19/04

(54) **VERFAHREN UND VORRICHTUNG ZUM HERSTELLEN EINER ANORDNUNG VON LAMINIERTEN KUNSTSTOFFFOLIENSCHICHTEN FÜR EINEN KUNSTSTOFFKARTENKÖRPER**
METHOD AND DEVICE FOR THE PRODUCTION OF AN ASSEMBLY OF LAMINATED PLASTIC FILM LAYERS FOR A PLASTIC CARD BODY
PROCÉDÉ ET DISPOSITIF DE FABRICATION D'UN DISPOSITIF DE COUCHES DE FEUILLE DE MATIÈRE PLASTIQUE LAMINÉES POUR UN CORPS DE TYPE CARTE EN MATIÈRE PLASTIQUE

(30) Priorität: 13.06.2017 DE 102017112951
(43) Veröffentlichungstag der Anmeldung: 19.12.2018
(73) Patentinhaber: Bundesdruckerei GmbH, 10969 Berlin (DE)
(72) Erfinder: Wilke, Andreas, 10969 Berlin (DE); Dressel, Olaf, 10969 Berlin (DE); Paeschke, Manfred, 10969 Berlin (DE); Komarov, Ilya, 10969 Berlin (DE)
(74) Vertreter: Bittner, Thomas L.

(56) Entgegenhaltungen:
- WO-A1-2014/055065
- DE-A1-102014 109 496
- US-A1- 2009 089 030

## Beschreibung

Die Erfindung betrifft ein Verfahren und eine Vorrichtung zum Herstellen einer Anordnung von laminierten Kunststofffolienschichten für einen Kunststoffkartenkörper

### Hintergrund

Beim Herstellen von Körpern für Kunststoffkarten werden üblicherweise mehrere Schichten von Kunststofffolien aufeinander laminiert. Der so hergestellte Körper kann für Kunststoffkarten in unterschiedlicher Ausprägung verwendet werden, wozu zum Beispiel Identitätskarten oder Ausweiskarten gehören, sei es mit oder ohne integrierten Chip.

In dem Dokument DE 10 2009 011 167 A1 sind Haftklebemassen beschrieben, die für das Verkleben der Kunststofffolien beim Laminieren zum Einsatz kommen können. Im Dokument EP 1 334 820 A2 ist ein Pressstempel für eine Laminierpresse und dessen Verwendung beschrieben. Ein Ober- und ein Unterstempel sind mit beheizbaren Pressflächen versehen, um die übereinander gestapelten Kunststoffschichten zu laminieren.

Um nach der Herstellung für den Einsatz als Kunststoffkarte geeignet zu sein, ist es erforderlich, dass der hergestellte Körper über eine ausreichende Laminierqualität verfügt. Insbesondere ist zu vermeiden, dass Teilbereiche der gestapelten Kunststofffolienschichten unzureichend oder nicht laminiert sind. Um laminierte Schichtanordnungen als geeigneten Körper für eine Kunststoffkarte oder Ausschuss zu qualifizieren, ist es bekannt, die Laminierqualität mittels eines Delaminationstests zu bestimmen. Bei den Delaminationstest wird die Kraft bestimmt, die nötig ist, um die laminierten Folien wieder voneinander zu trennen. Hierbei wird der zuvor laminierte Körper wieder zerstört.

Der so hergestellte Kunststoffkartenkörper kann beispielsweise verwendet werden, um ein Sicherheits- oder ein Identitätsdokument herzustellen, sei es beispielsweise als Chipkarte oder Karte ohne Chipmodul.

Aus dem Dokument DE 10 2014 109 496 A1 ist ein Verfahren zur Beurteilung der Qualität einer Lamination eines Folienverbundes bekannt, der aus zumindest zwei einander zugeordneten Lagen gebildet wird, die einer Laminierstation zugeführt und durch Lamination miteinander zu dem Folienverbund verbunden werden, wobei vor dem Laminieren in jede Lage zumindest eine Bohrung mit einer definierten Fläche A eingebracht wird, aus den Lagen ein unlaminiertes Folienheft gebildet wird und die Bohrungen der jeweiligen Lage zueinander fluchtend angeordnet sind, aus dem Folienheft der Folienverbund laminiert wird, eine Fläche B des zumindest einen laminierten Durchgangslochs im Folienverbund erfasst und mit einer Fläche A der Bohrung verglichen und die Veränderung der Fläche A der Bohrung zur Fläche B des laminierten Durchgangslochs erfasst und in einer Auswerteeinrichtung ausgewertet wird.

In dem Dokument DE 11 2012 004 413 T5 ist eine Laminierhülle offenbart. Die Laminierhülle weist eine erste und eine zweite Lage auf, die durch einen vorab versiegelten Rand verbunden sind. Die Laminierhülle weist auch Anzeigemittel in dem vorab versiegelten Rand auf, die einer Eigenschaft der Laminierhülle entsprechen. Die Laminierhülle ist dazu ausgelegt, einen Gegenstand zwischen der ersten und zweiten Lage aufzunehmen und den Gegenstand beim Verarbeiten in einem Laminiergerät zu laminieren.

Aus dem Dokument DE 10 2015 205 539 A1 ist eine Vorrichtung zum Laminieren eines aus mehreren Substratschichten bestehenden Substratschichtenstapels zu einem Sicherheits-Dokumentenkörper, umfassend mindestens eine thermische Presse mit mindestens einem beweglichen Stempel zum Laminieren des aus mehreren Substratschichten bestehenden Stapels und eine Steuereinrichtung zum Steuern eines Anpressdrucks der thermischen Presse bekannt, wobei die Vorrichtung mindestens einen Abstandssensor zum Messen mindestens eines Abstandes des mindestens einen beweglichen Stempels relativ zu einem weiteren Stempel umfasst, wobei der mindestens eine Abstandssensor ein dem Abstand entsprechendes Signal erzeugt.

### Zusammenfassung

Aufgabe der Erfindung ist es, ein Verfahren und eine Vorrichtung zum Herstellen einer Anordnung von laminierten Kunststofffolienschichten für einen Kunststoffkartenkörper bereitzustellen, mit denen der Herstellungsprozess hinsichtlich Qualität und Effizienz ist.

Zur Lösung der Aufgabe sind ein Verfahren und eine Vorrichtung zum Herstellen einer Anordnung von laminierten Kunststofffolienschichten für einen Kunststoffkartenkörper nach den unabhängigen Ansprüchen 1 und 11 geschaffen. Alternative Ausgestaltungen sind Gegenstand von abhängigen Unteransprüchen.

Nach einem Aspekt ist ein Verfahren zum Herstellen einer Anordnung von laminierten Kunststoffschichten für einen Kunststoffkartenkörper geschaffen, wobei das Verfahren die folgenden Schritte aufweist: Bereitstellen einer Anordnung gestapelter, nicht laminierter Kunststofffolienschichten, Bereitstellen von Materialparameterdaten, die eine oder mehrere Materialeigenschaften für einzelne der gestapelten, nicht laminierten Kunststofffolienschichten und / oder die Anordnung gestapelter, nicht laminierter Kunststofffolienschichten angeben, wobei die eine oder die mehreren Materialeigenschaften einen Istzustand für die Anordnung gestapelter, nicht laminierter Kunststofffolienschichten angeben, Bestimmen von Prozessparameterdaten mittels eines Materialmodells, welches den Materialparameterdaten die Prozessparameterdaten zuordnet, wobei die Prozessparameterdaten Prozessparameter wie Druck- und / oder Temperaturprofile für einen Laminierprozess angeben, mit dem aus der Anordnung gestapelter, nicht laminierter Kunststofffolienschichten eine Anordnung von laminierten Kunststofffolienschichten für einen Kunststoffkartenkörper hergestellt wird, Bestimmen von Maschinensteuerdaten mittels eines Maschinenmodells, welches den Prozessparameterdaten die Maschinensteuerdaten zuordnet, wobei die Maschinensteuerdaten Maschinesteuerparameter für eine im Laminierprozess verwendete Herstellungsmaschine angeben, mit der aus der Anordnung gestapelter, nicht laminierter Kunststofffolienschichten die Anordnung von laminierten Kunststofffolienschichten für den Kunststoffkartenkörper hergestellt wird; und Herstellen der Anordnung von laminierten Kunststofffolienschichten für den Kunststoffkartenkörper aus der Anordnung gestapelter, nicht laminierter Kunststofffolienschichten mittels der Herstellungsmaschine, wobei die Herstellungsmaschine hierbei den Maschinesteuerdaten entsprechend gesteuert wird.

Nach einem weiteren Aspekt ist eine Vorrichtung zum Herstellen einer Anordnung von laminierten Kunststofffolienschichten für einen Kunststoffkartenkörper aus einer Anordnung gestapelter, nicht laminierten Kunststofffolienschichten geschaffen, wobei die Vorrichtung eingerichtet ist, das Herstellungsverfahren auszuführen.

Mithilfe der Technologien ist es ermöglicht, flexibel und effizient laminierte Kunststofffolienschichten für den Kunststoffkartenkörper herzustellen, auch wenn die als Ausgangsmaterial dienenden gestapelten, nicht laminierten Kunststofffolienschichten individuell und / oder als Stapel schwankende oder variierende Materialeigenschaften aufweisen. Mithilfe des Materialmodells sowie des Maschinenmodells, die jeweils Zuordnungen charakterisieren, erfolgt die Steuerung der Herstellungsmaschine individuell abhängig von den für das Ausgangsmaterial, nämlich die Anordnung gestapelter, nicht laminierter Kunststofffolienschichten, bereitgestellten Materialparameterdaten. Diese geben eine oder mehrere Materialeigenschaften für einzelne der gestapelten, nicht laminierten Kunststofffolienschichten und / oder die Anordnung gestapelter, nicht laminierter Kunststofffolienschichten an. In Abhängigkeit hiervon erfolgt dann automatisiert die Steuerung der Komponenten der Herstellungsmaschine oder - anlage, beispielsweise von Heiz- oder Kühleinrichtungen sowie Press- oder Druckstempeln. Der Laminierprozess zum Herstellen der Anordnung von laminierten Kunststofffolienschichten für den Kunststoffkartenkörper wird so individuell in Abhängigkeit von den konkreten Materialeigenschaften des Ausgangsmaterials (Istzustand) gesteuert. Ziel des Herstellungsprozesses ist es, einen Sollzustand nach dem Laminieren herzustellen, insbesondere dahingehend, dass die Anordnung laminierte Kunststofffolienschichten wie gewünscht laminiert und nicht delaminierbar ist.

Die verschiedenen elektronischen Daten, insbesondere die Materialparameterdaten, die Prozessparameterdaten und / oder die Maschinensteuerdaten, können in einem oder mehreren Datenspeichern abgelegt sein oder werden, zum Beispiel in einer oder mehreren Datenbanken, auf die zum Beispiel eine Steuereinrichtung der Herstellungsmaschine Zugriff hat, wenn die Herstellungsmaschine für den Laminierprozess eingerichtet wird, insbesondere dadurch, dass, ausgehend von den Materialparametern, die Prozessparameterdaten sowie die Maschinensteuerdaten bestimmt werden.

Das Materialmodell stellt eine Zuordnung zwischen den Materialparameterdaten und den Prozessparameterdaten zur Verfügung. Hierbei können Materialparameterdaten, die eine einzelne Materialeigenschaft für die Anordnung gestapelter, nicht laminierter Kunststofffolienschichten anzeigen, mehrere Prozessparameter zugeordnet sein, die durch die Prozessparameterdaten angezeigt werden. Zum Beispiel können Druck- und / oder Temperaturprofile für verschiedene Maschinenkomponenten, die in der Herstellungsmaschine bei dem Laminierprozess zum Einsatz kommen, mittels der Prozessparameter angegeben werden. Zum Beispiel wird hierdurch ein Druck- und / oder Temperaturverlauf an einer Maschinenkomponente oder in dem Stapel von Kunststofffolienschichten während des Laminierprozesses angegeben. Das Maschinenmodell stellt dann eine Zuordnung zwischen den Prozessparameterdaten sowie Maschinensteuerdaten zur Verfügung, sodass Komponenten der Herstellungsmaschine so gesteuert werden, dass hierdurch die anhand der Prozessparameterdaten vorgegebenen Prozessparameter für den Laminierprozess verwirklicht werden. Ziel ist es, aus der Anordnung von gestapelten, nicht laminierten Kunststofffolienschichten, für die anhand der einen oder der mehreren Materialeigenschaften einen Istzustand (Ausgangszustand) angegeben ist, in die Anordnung laminierter Kunststofffolienschichten zu überführen, derart, dass diese gewünschte Materialeigenschaften (Sollzustand) aufweist. Die Prozessführung in der Herstellungsmaschine erfolgt den Maschinensteuerdaten entsprechend, die ihrerseits das Ergebnis des Anwendens des Materialmodells und des Maschinenmodells sind.

Beim Bereitstellen der Materialparameterdaten können die Materialparameterdaten aus Materialmessdaten bestimmt werden, die für die eine oder die mehreren Materialeigenschaften für die einzelnen der gestapelten, nicht laminierten Kunststofffolienschichten und / oder die Anordnung gestapelter, nicht laminierter Kunststofffolienschichten mit Hilfe einer Messeinrichtung erfasst werden. Es kann vorgesehen sein, für eine oder mehrere der Kunststofffolienschichten vor dem Anordnen in dem Stapel nicht laminierter Kunststofffolienschichten ein oder mehrere Materialparameter zu bestimmen, zum Beispiel mittels der Messeinrichtung. Es können ein oder mehrere Messeinrichtungen zum Einsatz kommen, die verschiedene Materialeigenschaften bestimmen, zum Beispiel optisch bestimmbare Materialeigenschaften und / oder andere Eigenschaften, zum Beispiel hinsichtlich der Leitfähigkeit von elektrischem Strom und / oder von Wärme (elektrische Leitfähigkeit, Wärmeleitfähigkeit). Aus den Materialmessdaten werden die Materialparameterdaten abgeleitet, die die eine oder die mehreren Materialeigenschaften anzeigen oder angeben, welche als Eingangsgröße für das Materialmodell dienen, um die Prozessparameterdaten zu bestimmen.

Das Bestimmen der Prozessparameterdaten mittels des Materialmodells kann weiterhin Folgendes aufweisen: Bestimmen einer Materialklasse, indem im Rahmen einer Klassifizierung mittels des Materialmodells den Materialparameterdaten eine oder mehrere Materialklassen aus einer Gruppe von Materialklassen zugeordnet werden, wobei die eine oder die mehreren Materialklassen jeweils durch eine oder mehrere Materialklasseneigenschaften charakterisiert sind, die bei der Klassifizierung mit der einen oder den mehreren durch die Materialparameterdaten angezeigten Materialeigenschaften vergleichbar sind, und Bestimmen der Prozessparameterdaten mittels des Materialmodells, welches auf Basis der Materialmodellierung der einen oder den mehreren Materialklassen die Prozessparameterdaten zuordnet. Beispielsweise können Kunststofffolienschichten unterschiedlichen Materialklassen zugeordnet werden, die unterschiedliche oder abweichende Schichtdicken angeben. Unterschiedliche Materialklassen können verschiedene Kunststoffmaterialien für die Kunststofffolienschichten betreffen. Mittels des Materialmodells werden den Materialklassen ein oder mehrere Prozessparameter zugeordnet, wodurch die Prozessparameterdaten bestimmt werden können, nachdem die Klassifizierung anhand der Materialparameterdaten erfolgt.

Das Bestimmen der Prozessparameterdaten mittels des Materialmodells kann weiterhin Folgendes aufweisen: Bestimmen einer Materialqualitätsklasse, indem im Rahmen einer weiteren Klassifizierung mittels des Materialmodells den Materialparameterdaten eine oder mehrere Materialqualitätsklassen aus einer Gruppe von Materialqualitätsklassen zugeordnet werden, wobei die eine oder die mehreren Materialqualitätsklassen jeweils durch eine oder mehrere Materialqualitätsklasseneigenschaften charakterisiert sind, die bei der weiteren Klassifizierung mit der einen oder den mehreren durch die Materialparameterdaten angezeigten Materialeigenschaften vergleichbar sind, und Bestimmen der Prozessparameterdaten mittels des Materialmodells, welches auf Basis der Materialmodellierung der einen oder den mehreren Materialqualitätsklassen die Prozessparameterdaten zuordnet. Materialqualitätsklassen können zum Beispiel zwischen Kunststofffolien unterscheiden, die durchgehend im Wesentlichen gleiche Eigenschaften aufweisen, beispielsweise gleiche Lichttransmissionen und / oder gleiche Dicke, sowie andererseits Kunststofffolien, die zumindest in Teilbereichen abweichende Materialeigenschaften aufweisen. Hierbei können die Kunststofffolien mit durchgehend im Wesentlichen gleichen Materialeigenschaften in eine höherrangige Materialklasse einsortiert / klassifiziert werden.

Das Verfahren kann weiterhin die folgenden Schritte aufweisen: Zuordnen der Prozessparameterdaten und / oder der Maschinesteuerdaten zu einem Sollzustand der Anordnung von laminierten Kunststofffolienschichten nach dem Laminierprozess, wobei der Sollzustand durch einen oder mehrere Materialsolleigenschaften für die Anordnung von laminierten Kunststofffolienschichten charakterisiert ist, und Bestimmen, ob die Anordnung von laminierten Kunststofffolienschichten nach dem Laminierprozess die eine oder die mehreren Materialsolleigenschaften aufweist. Die Anordnung von laminierten Kunststofffolienschichten wird als für einen Kunststoffkartenkörper geeignet eingestuft, wenn die Prüfung anzeigt, dass der Sollzustand gegeben ist. Wenn das nicht der Fall ist, kann die Anordnung von laminierten Kunststofffolienschichten als Ausschuss bewertet werden. Alternativ kann eine Nachbearbeitung der Anordnung von laminierten Kunststofffolienschichten vorgesehen sein, beispielsweise das nochmalige Anwenden von Druck und Wärme.

Eine oder die mehreren Materialsolleigenschaften können wenigstens eine optisch bestimmbare Materialeigenschaft umfassen, die mittels einer optischen Messeinrichtung bestimmt werden kann. Zu den optisch bestimmbaren Materialeigenschaften gehören zum Beispiel das Verhalten der Kunststofffolienschichten betreffend Absorption, Transmission, Emission und / oder Reflexion. Auch nicht optisch bestimmbare Materialeigenschaften können alternativ oder ergänzend herangezogen werden, zum Beispiel eine Prüfung der elektrischen Leitfähigkeit oder eines elektrischen Widerstands, insbesondere dann, wenn in dem Stapel laminierter Kunststofffolienschichten elektrisch leitende Elemente aufgenommen sind. Beim Vergleich von Materialeigenschaften, zum Beispiel betreffen den Istzustand und / oder den Sollzustand, werden Parameter als gleich bestimmt, wenn sie innerhalb vorgegebener Toleranzgrenzen übereinstimmen, wobei die Toleranzgrenzen je nach Anwendungsfall und individuell für unterschiedliche Materialeigenschaften festlegbar sind.

Die Prozessparameterdaten und / oder die Maschinesteuerdaten, welche dem Sollzustand zugeordnet sind, können in einer Datenbank als nicht geeignet für den Laminierprozess der Anordnung gestapelter, nicht laminierter Kunststofffolienschichten mit den Materialparameterdaten gekennzeichnet werden, wenn beim Bestimmen festgestellt wird, dass die Anordnung von laminierten Kunststofffolienschichten nach dem Laminierprozess die eine oder die mehreren Materialsolleigenschaften nicht aufweist. Auf diese Weise kann in der Datenbank eine Informationssammlung betreffend die verschiedenen Parameter und Eigenschaften für die Materialien, die Herstellungsmaschine und / oder den Laminierprozess erstellt werden. Für einen zukünftigen Laminierprozess kann so unterbunden werden, dass die im aktuellen Laminierprozess für die Anordnung gestapelter, nicht laminierter Kunststofffolienschichten verwendeten Prozessparameterdaten und / oder Maschinensteuerdaten erneut angewendet werden.

Die Prozessparameterdaten und / oder die Maschinensteuerdaten, welche dem Sollzustand zugeordnet sind, können in der Datenbank geändert werden, um den Sollzustand bei einem zukünftigen Laminierprozess für eine weitere Anordnung gestapelter, nicht laminierter Kunststofffolienschichten mit den Materialparameterdaten zu erreichen, wenn beim Bestimmen festgestellt wird, dass die Anordnung von laminierten Kunststofffolienschichten nach dem Laminierprozess die eine oder die mehreren Materialsolleigenschaften nicht aufweist. Eine Änderung kann beispielsweise vorsehen, dass die den Materialparameterdaten zugeordneten Prozessparameter geändert werden, beispielsweise dadurch, dass ein Druck- und / oder ein Temperaturprofil verändert werden. Alternativ oder ergänzend kann sich die Änderung auf die Maschinensteuerdaten beziehen, sodass die ursprünglich den Prozessparameterdaten zugeordneten Maschinensteuerdaten geändert werden, um bei dem gegebenen Istzustand (Ausgangszustand) tatsächlich den Sollzustand für die laminierten Kunststofffolienschichten zu erreichen. Auf diese Weise kann das Verfahren eine iterative Optimierung des Materialmodells und / oder des Maschinenmodells vorsehen.

Das Bestimmen der Prozessparameterdaten mittels des Materialmodells kann ein Zuordnen der Prozessparameterdaten zu den Materialparameterdaten auf Basis einer Materialmodellierung umfassen. Das Bestimmen der Maschinensteuerdaten mittels des Maschinenmodells kann ein Zuordnen der Maschinesteuerdaten zu den Prozessparameterdaten auf Basis einer Maschinenmodellierung umfassen. Das Materialmodell und / oder das Maschinenmodell können hierbei eine mathematische Modellierung von Prozessparametern, beispielsweise Druck- oder Temperaturprofilen, und / oder Maschinensteuerdaten umfassen. So kann das Betriebsverhalten einer Maschinenkomponente der Herstellungsmaschine, beispielsweise eines beheizten Druckstempels im Laminierprozess mathematisch modelliert werden, um hiervon Maschinensteuerdaten abzuleiten, die ihrerseits den Prozessparameterdaten zugeordnet sind. Alternativ können das Materialmodell und / oder das Maschinenmodell ausschließlich auf experimentell gewonnenen Informationen und Daten beruhen. Letzteres kann beispielsweise realisiert werden, wenn mithilfe des Verfahrens eine größere Anzahl von Laminierprozessen ausgeführt wurde, und Ist- sowie Sollzustand vielfach bestimmt wurden, um hieraus empirisch die Zuordnung zwischen Materialparameterdaten, Prozessparameterdaten und Maschinensteuerdaten abzuleiten. Auch eine Mischform von mathematischer Modellierung und empirischen Daten kann für das Materialmodell und / oder das Maschinenmodell genutzt werden.

Die Lamination der Kunststofffolienschichten erfolgt beispielsweise in einem bei der Herstellung von Sicherheitsdokumenten bekannten Heißpressverfahren, bei dem thermoplastische Kunststoffe unter erhöhten Temperaturen zusammengepresst werden, so dass ein Monoblock gebildet wird. Das Fügen der Schichten kann aber auch mittels Einsatz von Klebstoff oder mittels Kunst-stoffschweißen erfolgen. Infolge des Laminierens kann der Stapel von Kunststofffolienschichten im Wesentlichen frei von inneren Grenzflächen ausgebildet sein.

Die Kunststofffolienschichten können beispielsweise als Polycarbonatfolien ausgebildet sein. Vor dem Laminierprozess besitzen diese und andere Kunststofffolien eine natürliche Oberflächenrauigkeit, weshalb solche Kunststofffolien in der Durchsicht dann als "trüb" erscheinen. Die Trübheit einer Kunststofffolienschicht bei einer Lichtwellenlänge wird beispielsweise durch seinen Hazewert beschrieben, der zum Beispiel gemäß der Norm ASTM D 1003 bestimmt werden kann. Werden die Folien laminiert, wie dieses als solches bekannt ist, verschwinden beim Laminieren üblicherweise die Grenzflächen zwischen den Kunststofffolien aufgrund plastischer Verformung der Oberflächen und der Autohäsion vom Polycarbonatketten über Grenzflächen hinweg. Eine ideal laminierte Schichtanordnung weist daher im Wesentlichen keine physikalischen Grenzflächen mehr auf. Die Quelle der diffusen Lichtstreuung (Oberflächenrauigkeit) wird durch das Laminieren zumindest verringert. Hierdurch wird die Lichttransmission bei Wellenlängen, bei denen die Schichtanordnung im Wesentlichen keine Absorption aufweist, deutlich erhöht, was den Hazewert verringert. Diese Eigenschaft kann bei der Prüfung des Sollzustands herangezogen werden.

Das Verfahren zum Herstellen der Anordnung von laminierten Kunststofffolienschichten kann in ein Verfahren zum Herstellen einer Kunststoffkarte integriert werden, bei dem aus der Anordnung von laminierten Kunststofffolienschichten ein Kunststoffkartenkörper hergestellt wird, in den wahlweise ein Chipmodul integriert werden kann, um eine Chipkarte herzustellen. Es kann sich eine Personalisierung der Kunststoffkarte anschließen wie dieses als solches in verschiedenen Ausführungsformen bekannt ist, beispielweise für Sicherheits- oder Identitätsdokumente (Karten). Zum Beispiel kann ein Kunststoffkartenkörper mit einem Format für Identitätsdokumente hergestellt werden, nämlich ID-1, ID-2 oder ID-3, nach ISO / IEC 7810 sein.

Die in Verbindung mit dem Verfahren erläuterten Ausgestaltungen können im Zusammenhang mit der Vorrichtung zum Herstellen einer Anordnung von laminierten Kunststoffschichten für einen Kunststoffkartenkörper entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung in Verbindung mit einem Verfahren zum Herstellen einer Anordnung von laminierten Kunststofffolienschichten für einen Kunststoffkartenkörper;
- Fig. 2: eine schematische Darstellung für Schritte zum Bestimmen von Maschinensteuerdaten ausgehend von einer Messung eines Istzustands einer Anordnung gestapelter, nicht laminierter Kunststofffolienschichten; und
- Fig. 3: eine schematische Darstellung für einen iterativen Optimierungsprozess.

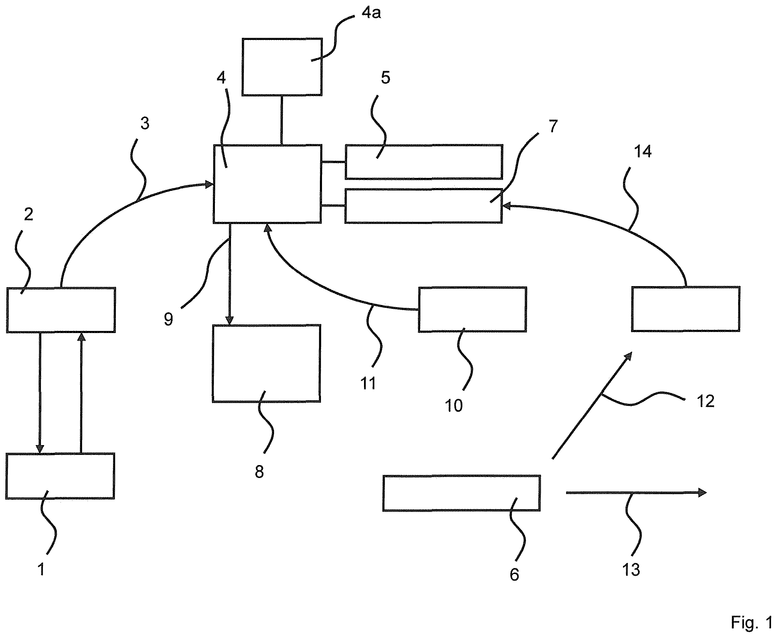

Fig. 1 zeigt eine schematische Darstellung einer Anordnung zum Herstellen laminierter Kunststofffolienschichten für einen Kunststoffkartenkörper. Als Ausgangsmaterial wird eine Anordnung gestapelter, nicht laminierter Kunststofffolienschichten 1 bereitgestellt. Mithilfe einer Messeinrichtung 2, bei der es sich beispielsweise um eine optische Analysevorrichtung wie ein Spektrometer handelt, werden eine oder mehrere Materialeigenschaften für die Anordnung gestapelter, nicht laminierter Kunststofffolienschichten 1 bestimmt. Beispielsweise können optische Materialeigenschaften bestimmt werden, insbesondere betreffend das Absorptions-, Transmissions-, Reflexions- und / oder Emissionsverhalten der Anordnung gestapelter, nicht laminierter Kunststofffolienschichten 1.

Die so bestimmten Materialeigenschaften charakterisieren einen Istzustand (Ausgangszustand) der Anordnung gestapelter, nicht laminierter Kunststofffolienschichten 1. Die für die Materialeigenschaften gewonnen Messdaten werden in einem Schritt 3 an eine Datenverarbeitungseinrichtung 4 gegeben, die zum Beispiel mit einem oder mehreren Prozessoren sowie einer Datenspeichereinrichtung gebildet ist, beispielweise einer Datenbank 4a. Mithilfe der Datenverarbeitungseinrichtung 4 werden aus den Messdaten Materialparameterdaten bestimmt, die den Istzustand der Anordnung gestapelter, nicht laminierter Kunststofffolienschichten 1 anzeigen. Mithilfe eines Materialmodells 5 werden den Materialparameterdaten Prozessparameterdaten zugeordnet, die einen oder mehrere Prozessparameter angeben. Die Prozessparameter beziehen sich beispielsweise auf Druck- und / oder Temperaturprofile, die im Laminierprozess für die Anordnung gestapelter, nicht laminierter Kunststofffolienschichten 1 anzuwenden sind, um das Ausgangsmaterial in einen Sollzustand zu überführen, nämlich einer Anordnung von laminierten Kunststofffolienschichten 6 nach dem Laminierprozess. Mithilfe des Materialmodells 5 werden die Prozessparameterdaten in Abhängigkeit von den Materialparameterdaten bestimmt.

Im Weiteren werden mittels der Datenverarbeitungseinrichtung 4 Maschinensteuerdaten bestimmt, wobei hierzu auf ein Maschinenmodell 7 zurückgegriffen wird, welches eine Zuordnung zwischen den Prozessparameterdaten und Maschinensteuerdaten bereitstellt, die Maschinensteuerparameter betreffen, nach denen Komponenten der für den Laminierprozess genutzten Herstellungsmaschine gesteuert werden, um die jeweils zugeordneten Prozessparameter im Herstellungsprozess zu verwirklichen. Die Maschinensteuerdaten werden im Schritt 9 an die Herstellungsmaschine 8 übergeben, worauf der Laminierprozess den Maschinensteuerdaten entsprechend ausgeführt werden kann.

Die Datenverarbeitungseinrichtung 4 kann Teil der Herstellungsmaschine 8 sein oder getrennt hiervon ausgebildet sein.

Nach dem Laminierprozess wird die Anordnung von laminierten Kunststofffolienschichten 6 mithilfe einer Analysevorrichtung 10 bestimmt, wobei beispielsweise optisch bestimmbare Eigenschaften gemessen werden, um festzustellen, ob die Anordnung laminierter Kunststofffolienschichten 6 dem Sollzustand entspricht, der durch eine oder mehrere Materialsolleigenschaften bestimmt ist. Für den Vergleich mit den Materialsolleigenschaften wird im Schritt 11 bei dem gezeigten Ausführungsbeispiel auf entsprechende Daten in der Datenverarbeitungseinrichtung 4 zurückgegriffen.

In Abhängigkeit vom Ergebnis der Prüfung kann die Anordnung von laminierten Kunststofffolienschichten 6 im Schritt 12 als Ausschuss oder im Schritt 13 als geeignet für einen Kunststoffkartenkörper eingestuft werden, je nachdem, ob der durch die eine oder die mehreren Materialsolleigenschaften charakterisierte Sollzustand - innerhalb vorgebbarer Toleranzen - gegeben ist oder nicht. Im Fall, dass die Anordnung von laminierten Kunststofffolienschichten 6 im Schritt 13 als Ausschuss eingestuft wird, erfolgt im Schritt 14 eine Rückmeldung an das Maschinenmodell 7, dahingehend, dass die für den ausgeführten Laminierprozss genutzten Prozessparameterdaten und / oder Maschinensteuerdaten geändert werden, um bei weiteren Laminierprozessen für gestapelte, nicht laminierte Kunststofffolienschichten mit gleichen oder ähnlichen Materialeigenschaften die geänderten Prozessparameterdaten und / oder Maschinensteuerdaten anzuwenden. Auch kann in der Datenverarbeitungseinrichtung 4 eine Hinterlegung von elektronischen Informationen betreffend den Ausschuss erfolgen, sodass die Verwendung der genutzten Prozessparameterdaten / Maschinensteuerdaten für zukünftige Laminierprozesse unterbunden werden kann. Die Messergebnisse können als Anomalie in der Datenbank 4a gespeichert und mit den verwendeten Maschinensteuerparametern korreliert werden.

Hierdurch kann ein iteratives Erlernen korrekten Maschinensteuerparameter für die Überführung eines gemessenen Istzustandes (Materialqualität) in den Sollzustand (nicht delaminierbarer Kunststoffkartenkörper) ausgeführt werden, so dass ab einem gewissen Zeitpunkt die Verwendung Materialmodell und / oder Maschinenmodelle nicht mehr nötig sein kann, da die Informationen in der Datenbank 4a ausreichen, um aus einem gemessenen Istzustand die benötigten Maschinensteuerparameter abzuleiten.

Die Datenbank 4a kann ein "zentrales Nervensystem" vom Regelprozess für die Herstellungsmaschine 8 bilden, In der Datenbank 4a können alle relevanten Informationen abgespeichert (Maschinenmodell, Materialmodell, Messdaten von Prozessdetails, Auswertungsalgorithmen, etc.). Diese Abspeicherung ermöglicht eine Dokumentation, aber auch für die Prozessoptimierung und für den Vergleich von Messungen mit abgespeicherten Referenzen kann dies genutzt werden.

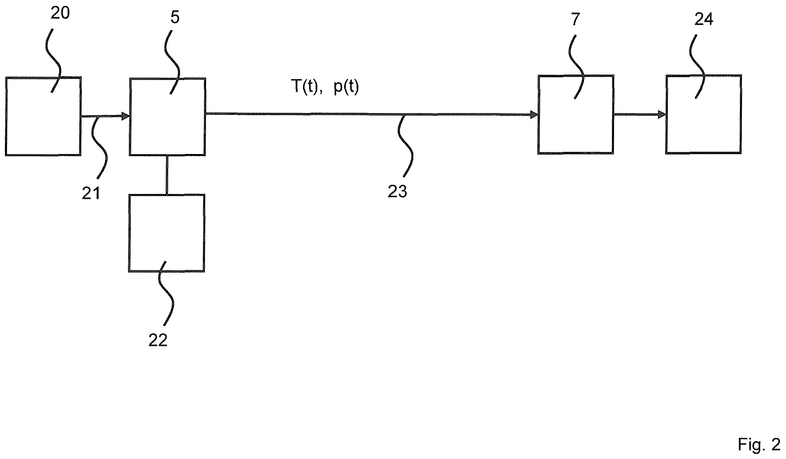

Fig. 2 zeigt eine schematische Darstellung betreffend das Bestimmen der Maschinensteuerdaten. Nach dem Bestimmen des Istzustands im Schritt 20 werden im Schritt 21 die Messdaten an das Materialmodell 5 übergeben. Aus Informationen 22 Ober den Sollzustand der zu erzeugenden Anordnung von laminierten Kunststofffolienschichten 6 bestimmt das Materialmodell 5 bei der gezeigten Ausführungsform ein zeitliches Temperaturprofil sowie ein zeitliches Druckprofil für den Laminierprozess. Die Informationen hierüber werden im Schritt 23 an das Maschinenmodell 7 übergeben, welches dann im Schritt 24 die Maschinensteuerdaten bestimmt.

Nachfolgend werden weitere Aspekte der Technologien erläutert.

Bei der beschriebene Vorgehensweise können reale Schwankungen bei den Materialeigenschaften und hieraus resultierende echte Produktionsprobleme oder -ausfälle vermieden werden, weil die Maschinen und die zugehörigen Regelkreise darauf ausgelegt sind, auf solche materielle Stör- oder Abweichfaktoren zu reagieren. Die Materialschwankungen können Prozessschritte zur Ursache haben, die die Lamination beeinflussen, was bei den hier beschriebenen Verfahren vermieden wird. So ist beispielsweise bekannt, dass die UV-Trocknung von Druckfarben auf dem als Substrat für den Kunststoffkartenkörper verwendeten Polycarbonat materielle Veränderungen im Substrat verursacht, insbesondere auf den Oberflächen. Diese materiellen Veränderungen haben wiederum negative Folgen für die Lamination von Polycarbonat.

Strukturellen Defizite der maschinellen Regelkreise beim Laminierprozess werden vermieden, weil die Regelung der Maschineneinstellungen (Maschinensteuerdaten) von dem Materialzustand abhängig macht, der in die Maschine eingeführt wird. Ferner ermöglichen die vorgeschlagenen Technologien die Realisierung von Produktionsverfahren für Produkte, zum Beispiel neue Kartenaufbauten mit neuen Folienpermutationen, die noch nie vorher hergestellt wurden.

Das Materialmodell 5 (vgl. Fig. 1) kann Modellebeschreibungen der verwendeten Materialien der Kunststofffolienschichten beinhalten. Die Beschreibungen können beispielsweise mit Hilfe von Funktionen realisiert werden. Die Funktion der Materialmodelle kann in einem Ausführungsbeispiel in zwei Funktionalitäten getrennt werden.

Klassifizierung: Mit diesen Funktionen wird das Finden eines Materials mit Hilfe der verwendeten Analysemethode realisiert (Klassifizierung). Das kann beispielsweise durch ein spektroskopisches Messverfahren realisiert werden, bei dem beispielweise eine Transmissionsintensität in einem Wellenlängenbereich gemessen wird oder verschiedene spektrale Peaks ausgewertet werden

Thermodynamischer Anteil des Materialmodells: Dieser Modellanteil hat die Aufgabe, die nötigen zeitlichen Temperatur- und Druckprofile für das Material zu bestimmen, die den materiellen Istzustand vor der Verarbeitung (Folienstapel) in den materiellen Sollzustand (nicht delaminierbarer Kartenkörper) überführen. Hierbei können alle relevanten physikalischen Faktoren im Modell berücksichtigt werden.

Im Kontext der Lamination von Kunststoffkartenkörpern sind relevante Materialparameter für die thermoplastischen Folien zum Beispiel: Polydispersität, Glasübergangstemperatur, Wärmeleitfähigkeit, Dichte, Wärmekapazität, Materialdicke, Oberflächenrauigkeit und / oder Prozessgeschichte.

Die im Material benötigten Temperatur- und Druckprofile können als Anforderungen an das Maschinenmodell 7 (vgl. Fig. 1) weitergeleitet, um die nötige Einstellung der Herstellungsmaschine zu bestimmen (Liste der Maschinenparameter).

Das Maschinenmodell 7 hat die Aufgabe, die Maschinensteuerparameter zu bestimmen, die die benötigten Temperatur- und Druckprofile im Material zur Folge haben. Im Detail geschieht das zum Beispiel auf folgende Weise. In einem ersten Schritt wird ein über Experimente parametrisiertes Modell erstellt, welches beispielsweise den Wärmefluss der Laminationsmaschine in Abhängigkeit von den Maschinensteuerparametern beschreibt. Wenn diese Beschreibung vorliegt, kann dieses Modell verwendet werden, um sinnvolle und mögliche Temperaturkennlinien zu bestimmen. Diese berechneten Kurven können dann entweder als xy-Tabellen in einer Datenbank oder als Funktionen - nach erfolgtem Fitten der Kennlinien - abgespeichert werden.

Wenn jetzt vom Materialmodell 5 eine Anfrage betreffend eine bestimmte Kennlinie kommt, kann mittels Abgleich simulierter Kennlinien die Maschineneinstellung gefunden werden, die dem Material die nötigen Bedingungen zur Verfügung stellt.

Ferner kann vorgesehen sein, das Materialmodell 5 und / oder das Maschinenmodell 7 kontinuierlich mittels Integration von gewonnen Messdaten zu verbessern und zu optimieren.

Die Mess- und Analysevorrichtung, mit denen die Anordnung gestapelter, nicht laminierter Kunststofffolienschichten 1 und / oder die Anordnung von laminierten Kunststofffolienschichten 6 bestimmt werden, kann auch zusammenfassend als Sensorik bezeichnet werden. Sie hat insbesondere die Aufgabe, den Materialzustand sowohl vor dem Maschinenprozess (Istzustand) als auch nach dem Prozess (Kontrolle des Sollzustandes) zu erfassen.

Mit der Messung der Materialzustände können zum Beispiel folgende Ziele realisiert werden.

Durch die Messung des Istzustandes und dem gleichzeitigen Abgleich mit der Datenbank 4a können materielle Stoffe klassifiziert werden, die in den Maschinenprozess eingefügt werden. Bei diesem Kontrollschritt wird das Material auf Anomalien geprüft, zum Beispiel Vorschädigungen durch UV-Trocknung. Ein weiterer möglicher Abgleich könnte beispielsweise erfolgen, um Anomalien in einem Kartenaufbau zu identifizieren (falsche Permutationen von Folienlagen).

Mit der Messung vom Sollzustand kann kontrolliert werden, ob der fertige Kartenkörper in den richtigen materiellen Zustand gefertigt wurde, als auch als Grundlage für die Maschinenregelung zu verwenden, wenn sich Anomalien im Prozess ergeben.

Wenn die Messung einen korrekten Sollzustand (keine Anomalien) ergibt, wird die Anordnung von laminierten Kunststofffolienschichten 6 als mängelfrei deklariert und der weiteren Verwendung zur Verfügung gestellt. Die zugehörigen Messergebnisse und die Maschinensteuerparameter des Produktionsprozesses werden in der Datenbank 4a abgespeichert. Die zugehörten Messergebnisse stehen dann zukünftigen Datenvergleichen zur Verfügung (Korrelationsanalyse und Optimierungsanalyse).

Wenn die Messung eine Anomalie im Sollzustand ergibt, zum Beispiel eine unvollständige Lamination, wird die Anordnung von laminierten Kunststofffolienschichten 6 als Ausschuss markiert. Als Konsequenz werden mit Hilfe des Material- und des Maschinenmodells neue Maschinensteuerparameter bestimmt, mit dem Ziel, beim nächsten Versuch den gleichen Istzustand in den gewünschten Sollzustand - ohne Anomalie - zu überführen.

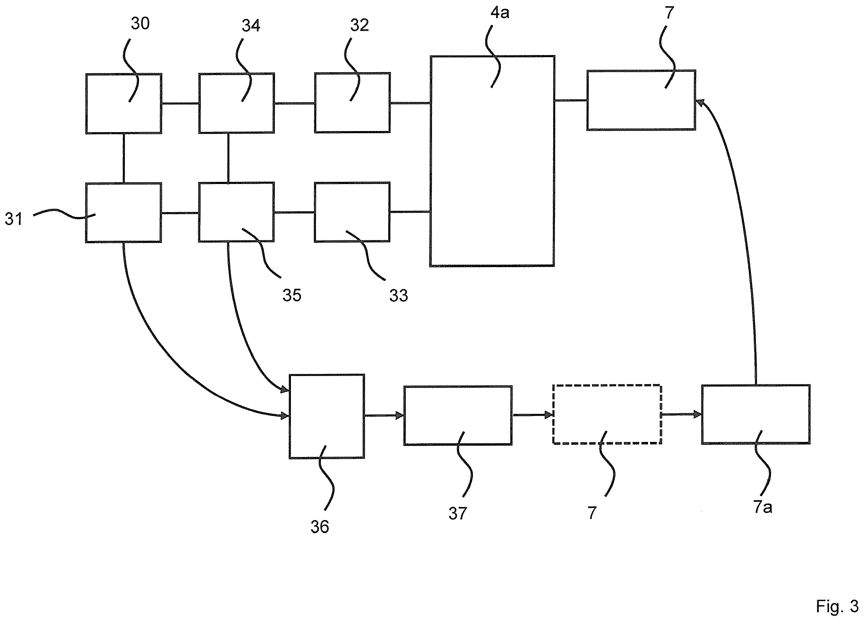

Eine weitere Technologiekomponente kann die Analyse der beim Bestimmen der Anordnung von laminierten Kunststofffolienschichten 6 angefallenen Messdaten der Produktionsprozesse sein (vgl. Fig. 3). Nach dem Ausführungsbeispiel werden für zwei unterschiedliche Laminierprozesse zum jeweiligen Herstellen einer Anordnung von laminierten Kunststofffolienschichten Informationen den Sollzustand betreffend bereitgestellt 30, 31. Für die beiden dann hergestellten Produkte 32, 33 (Anordnungen von laminierten Kunststofffolienschichten) werden Messdaten bestimmt 34, 35, um zu prüfen, ob der jeweilige Sollzustand gegeben ist. Eine Datenanalyse 36 mittels Korrelationsalgorithmen 37 ermöglicht eine effiziente Erfassung der Korrelationen der einzelnen Prozessparameter. Mit diesen Korrelationen ist es möglich, das Maschinenmodell 7 zu optimieren zu einem optimierten Maschinenmodell 7a und ggf. in der Datenbank 4a zu ergänzen oder zu modifizieren. Wenn eine kritische Informationsdichte überschritten ist, kann diese Analyse verwendet werden um aus dem Istzustand schon die benötigten Maschinenparameter - ohne zugehörige Modelle - vorherzusagen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: nicht laminierte Kunststofffolienschichten
- 2: Messeinrichtung
- 3, 9,11, ..., 14, 20, 21, 23, 24: Schritte
- 4: Datenverarbeitungseinrichtung
- 4a: Datenbank
- 5,: Materialmodell
- 6: laminierte Kunststofffolienschichten
- 7: Maschinenmodell
- 7a: optimiertes Maschinenmodell
- 8: Herstellungsmaschine
- 10: Analysevorrichtung
- 22: Informationen über Sollzustand
- 30, 31: Bereitstellung von Informationen betreffend einen Sollzustand
- 32, 33: hergestellte Produkte
- 34, 35: Messdaten
- 36: Datenanalyse
- 37: Korrelationsalgorithmen

## Patentansprüche

1. Verfahren zum Herstellen einer Anordnung von laminierten Kunststofffolienschichten (6) für einen Kunststoffkartenkörper, wobei das Verfahren die folgenden Schritte aufweist:
- Bereitstellen einer Anordnung gestapelter, nicht laminierter Kunststofffolienschichten (1);
- Bereitstellen von Materialparameterdaten, die eine oder mehrere Materialeigenschaften für einzelne der gestapelten, nicht laminierten Kunststofffolienschichten (1) und / oder die Anordnung gestapelter, nicht laminierter Kunststofffolienschichten (1) angeben, wobei die eine oder die mehreren Materialeigenschaften einen Istzustand für die Anordnung gestapelter, nicht laminierter Kunststofffolienschichten (1) angeben;
- Bestimmen von Prozessparameterdaten mittels eines Materialmodells (5), welches den Materialparameterdaten die Prozessparameterdaten zuordnet, wobei die Prozessparameterdaten Prozessparameter wie Druck- und / oder Temperaturprofile für einen Laminierprozess angeben, mit dem aus der Anordnung gestapelter, nicht laminierter Kunststofffolienschichten (1) eine Anordnung von laminierten Kunststofffolienschichten (6) für einen Kunststoffkartenkörper hergestellt wird;
- Bestimmen von Maschinensteuerdaten mittels eines Maschinenmodells (7), welches den Prozessparameterdaten die Maschinensteuerdaten zuordnet, wobei die Maschinensteuerdaten Maschinesteuerparameter für eine im Laminierprozess verwendete Herstellungsmaschine angeben, mit der aus der Anordnung gestapelter, nicht laminierter Kunststofffolienschichten (1) die Anordnung von laminierten Kunststofffolienschichten (6) für den Kunststoffkartenkörper hergestellt wird; und
- Herstellen der Anordnung von laminierten Kunststofffolienschichten (6) für den Kunststoffkartenkörper aus der Anordnung gestapelter, nicht laminierter Kunststofffolienschichten (1) mittels der Herstellungsmaschine, wobei die Herstellungsmaschine hierbei den Maschinesteuerdaten entsprechend gesteuert wird.

2. Verfahren nach Anspruch 1, **dadurch gekennzeichnet, dass** beim Bereitstellen der Materialparameterdaten die Materialparameterdaten aus Materialmessdaten bestimmt werden, die für die eine oder die mehreren Materialeigenschaften für die einzelnen der gestapelten, nicht laminierten Kunststofffolienschichten (1) und / oder die Anordnung gestapelter, nicht laminierter Kunststofffolienschichten (6) mit Hilfe einer Messeinrichtung erfasst werden.

3. Verfahren nach Anspruch 1 oder 2, **dadurch gekennzeichnet, dass** das Bestimmen der Prozessparameterdaten mittels des Materialmodells weiterhin Folgendes aufweist:
- Bestimmen einer Materialklasse, indem im Rahmen einer Klassifizierung mittels des Materialmodells (5) den Materialparameterdaten eine oder mehrere Materialklassen aus einer Gruppe von Materialklassen zugeordnet werden, wobei die eine oder die mehreren Materialklassen jeweils durch eine oder mehrere Materialklasseneigenschaften charakterisiert sind, die bei der Klassifizierung mit der einen oder den mehreren durch die Materialparameterdaten angezeigten Materialeigenschaften vergleichbar sind; und
- Bestimmen der Prozessparameterdaten mittels des Materialmodells, welches auf Basis der Materialmodellierung der einen oder den mehreren Materialklassen die Prozessparameterdaten zuordnet.

4. Verfahren nach mindestens einem der vorangehenden Ansprüche, **dadurch gekennzeichnet, dass** das Bestimmen der Prozessparameterdaten mittels des Materialmodells weiterhin Folgendes aufweist:
- Bestimmen einer Materialqualitätsklasse, indem im Rahmen einer weiteren Klassifizierung mittels des Materialmodells (5) den Materialparameterdaten eine oder mehrere Materialqualitätsklassen aus einer Gruppe von Materialqualitätsklassen zugeordnet werden, wobei die eine oder die mehreren Materialqualitätsklassen jeweils durch eine oder mehrere Materialqualitätsklasseneigenschaften charakterisiert sind, die bei der weiteren Klassifizierung mit der einen oder den mehreren durch die Materialparameterdaten angezeigten Materialeigenschaften vergleichbar sind; und
- Bestimmen der Prozessparameterdaten mittels des Materialmodells, welches auf Basis der Materialmodellierung der einen oder den mehreren Materiatquaiitätsktassen die Prozessparameterdaten zuordnet.

5. Verfahren nach mindestens einem der vorangehenden Ansprüche, **dadurch gekennzeichnet, dass** weiterhin die folgenden Schritte vorgesehen sind:
- Zuordnen der Prozessparameterdaten und / oder der Maschinesteuerdaten zu einem Sollzustand der Anordnung von laminierten Kunststofffolienschichten (6) nach dem Laminierprozess, wobei der Sollzustand durch einen oder mehrere Materialsolleigenschaften für die Anordnung von laminierten Kunststofffolienschichten (6) charakterisiert ist; und
- Bestimmen, ob die Anordnung von laminierten Kunststofffolienschichten (6) nach dem Laminierprozess die eine oder die mehreren Materialsolleigenschaften aufweist.

6. Verfahren nach Anspruch 5, **dadurch gekennzeichnet, dass** eine oder die mehreren Materialsolleigenschaften wenigstens eine optisch bestimmbare Materialeigenschaft umfassen, die mittels einer optischen Messeinrichtung bestimmt werden kann.

7. Verfahren nach Anspruch 5 oder 6, **dadurch gekennzeichnet, dass** die Prozessparameterdaten und / oder die Maschinesteuerdaten, weiche dem Sollzustand zugeordnet sind, in einer Datenbank (4a) als nicht geeignet für den Laminierprozess der Anordnung gestapelter, nicht laminierter Kunststofffolienschichten mit den Materialparameterdaten gekennzeichnet werden, wenn beim Bestimmen festgestellt wird, dass die Anordnung von laminierten Kunststofffolienschichten (6) nach dem Laminierprozess die eine oder die mehreren Materialsolleigenschaften nicht aufweist.

8. Verfahren nach mindestens einem der Ansprüche 5 bis 7, **dadurch gekennzeichnet, dass** die Prozessparameterdaten und / oder die Maschinensteuerdaten, welche dem Sollzustand zugeordnet sind, in der Datenbank (4a) geändert werden, um den Sollzustand bei einem zukünftigen Laminierprozess für eine weitere Anordnung gestapelter, nicht laminierter Kunststofffolienschichten mit den Materialparameterdaten zu erreichen, wenn beim Bestimmen festgestellt wird, dass die Anordnung von laminierten Kunststofffolienschichten (6) nach dem Laminierprozess die eine oder die mehreren Materialsolleigenschaften nicht aufweist.

9. Verfahren nach mindestens einem der vorangehenden Ansprüche, **dadurch gekennzeichnet, dass** das Bestimmen der Prozessparameterdaten mittels des Materialmodells (5) ein Zuordnen der Prozessparameterdaten zu den Materialparameterdaten auf Basis einer Materialmodellierung umfasst.

10. Verfahren nach mindestens einem der vorangehenden Ansprüche, **dadurch gekennzeichnet, dass** das Bestimmen der Maschinensteuerdaten mittels des Maschinenmodells (7) ein Zuordnen der Maschinesteuerdaten zu den Prozessparameterdaten auf Basis einer Maschinenmodellierung umfasst.

11. Vorrichtung zum Herstellen einer Anordnung von laminierten Kunststofffolienschichten (6) für einen Kunststoffkartenkörper aus einer Anordnung gestapelter, nicht laminierter Kunststofffolienschichten (1), wobei die Vorrichtung die eingerichtet ist, ein Herstellungsverfahren nach mindestens einem der vorangehenden Ansprüche auszuführen.

## Claims

1. Method for producing an arrangement of laminated plastics film layers (6) for a plastics card body, wherein the method comprises the following steps:
- providing an arrangement of stacked, non-laminated plastics film layers (1);
- providing material parameter data which indicate one or more material properties for individual layers of the stacked, non-laminated plastics film layers (1) and/or the arrangement of stacked, non-laminated plastics film layers (1), wherein the one or more material properties indicate a current state for the arrangement of stacked, non-laminated plastics film layers (1);
- determining process parameter data by means of a material model (5) which assigns the process parameter data to the material parameter data, wherein the process parameter data indicate process parameters such as pressure profiles and/or temperature profiles for a lamination process, by means of which an arrangement of laminated plastics film layers (6) for a plastics card body is produced from the arrangement of stacked, non-laminated plastics film layers (1);
- determining machine control data by means of a machine model (7) which assigns the machine control data to the process parameter data, wherein the machine control data indicate machine control parameters for a production machine used in the lamination process, by means of which machine the arrangement of laminated plastics film layers (6) for a plastics card body is produced from the arrangement of stacked, non-laminated plastics film layers (1); and
- producing the arrangement of laminated plastics film layers (6) for the plastics card body from the arrangement of stacked, non-laminated plastics film layers (1) by means of the production machine, wherein the production machine is controlled in accordance with the machine control data.

2. Method according to claim 1, **characterized in that**, when the material parameter data are provided, the material parameter data are determined from material measurement data which are recorded, using a measuring device, for the one or more material properties for the individual layers of the stacked, non-laminated plastics film layers (1) and/or the arrangement of stacked, non-laminated plastics film layers (6).

3. Method according to claim 1 or 2, **characterized in that** determining the process parameter data using the material model further comprises:
- determining a material class by assigning one or more material classes from a group of material classes to the material parameter data as part of a classification by means of the material model (5), the one or more material classes each being **characterized by** one or more material class properties which, during the classification, can be compared with the one or more material properties indicated by the material parameter data; and
- determining the process parameter data by means of the material model which assigns the process parameter data to the one or more material classes on the basis of the material modeling.

4. Method according to at least one of the preceding claims, **characterized in that** determining the process parameter data by means of the material model further comprises:
- determining a material quality class by assigning one or more material quality classes from a group of material quality classes to the material parameter data in as part of a further classification by means of the material model (5), the one or more material quality classes each being **characterized by** one or more material quality class properties which, during the further classification, can be compared with the one or more material properties indicated by the material parameter data; and
- determining the process parameter data by means of the material model which assigns the process parameter data to the one or more material quality classes on the basis of the material modeling.

5. Method according to at least one of the preceding claims, **characterized in that** the following steps are further provided:
- assigning the process parameter data and/or the machine control data to a desired state of the arrangement of laminated plastics film layers (6) after the lamination process, the desired state being **characterized by** one or more desired material properties for the arrangement of laminated plastics film layers (6); and
- determining whether the arrangement of laminated plastics film layers (6) has the one or more desired material properties after the lamination process.

6. Method according to claim 5, **characterized in that** one or more desired material properties comprise at least one optically determinable material property which can be determined by means of an optical measuring device.

7. Method according to claim 5 or 6, **characterized in that** the process parameter data and/or the machine control data which are assigned to the desired state are **characterized in** a database (4a) as not suitable for the lamination process of the arrangement of stacked, non-laminated plastics film layers with the material parameter data, if it is established during the determination that the arrangement of laminated plastics film layers (6) does not have the one or more desired material properties after the lamination process.

8. Method according to at least one of claims 5 to 7, **characterized in that** the process parameter data and/or the machine control data which are assigned to the desired state are changed in the database (4a) in order to achieve the desired state in a future lamination process for a further arrangement of stacked, non-laminated plastics film layers with the material parameter data, if it is established during the determination that the arrangement of laminated plastics film layers (6) does not have the one or more desired material properties after the lamination process.

9. Method according to at least one of the preceding claims, **characterized in that** determining the process parameter data by means of the material model (5) comprises assigning the process parameter data to the material parameter data on the basis of material modeling.

10. Method according to at least one of the preceding claims, **characterized in that** determining the machine control data by means of the machine model (7) comprises assigning the machine control data to the process parameter data on the basis of machine modeling.

11. Device for producing an arrangement of laminated plastics film layers (6) for a plastics card body from an arrangement of stacked, non-laminated plastics film layers (1), the device being configured to carry out a production method according to at least one of the preceding claims.

## Revendications

1. Procédé de fabrication d'un dispositif de couches de feuille de matière plastique laminées (6) pour un corps de type carte en matière plastique, le procédé comportant les étapes suivantes :
- mise à disposition d'un dispositif de couches de feuille de matière plastique empilées non laminées (1) ;
- mise à disposition de données de paramètres de matériau indiquant une ou plusieurs propriétés de matériau pour des couches individuelles de couches de feuille de matière plastique empilées non laminées (1) et/ou pour le dispositif de couches de feuille de matière plastique empilées non laminées (1), la ou les propriétés de matériau indiquant un état réel pour le dispositif de couches de feuille de matière plastique empilées non laminées (1) ;
- détermination de données de paramètres de processus au moyen d'un modèle de matériau (5), lequel associe les données de paramètres de processus aux données de paramètres de matériau, les données de paramètres de processus indiquant des paramètres de processus tels que des profils de pression et/ou de température pour un processus de laminage qui permet la fabrication d'un dispositif de couches de feuille de matière plastique laminées (6) à partir d'un dispositif de couches de feuille de matière plastique empilées non laminées (1) pour un corps de type carte en matière plastique ;
- détermination de données de commande de machine au moyen d'un modèle de machine (7), lequel associe les données de commande de machine aux données de paramètres de processus, les données de commande de machine indiquant les paramètres de commande de machine pour une machine de fabrication utilisée dans le processus de laminage qui permet la fabrication du dispositif de couches de feuille de matière plastique laminées (6) à partir d'un dispositif de couches de feuille de matière plastique empilées non laminées (1) pour le corps de type carte en matière plastique ; et
- fabrication du dispositif de couches de feuille de matière plastique laminées (6) pour le corps de type carte en matière plastique à partir du dispositif de couches de feuille de matière plastique empilées non laminées (1) au moyen de la machine de fabrication, la machine de fabrication étant commandée conformément aux données de commande de machine.

2. Procédé selon la revendication 1, **caractérisé en ce que** lors de la mise à disposition des données de paramètres de matériau, les données de paramètres de matériau sont déterminées à partir de données de mesure de matériau qui sont collectées, au moyen d'un appareil de mesure, pour la ou les propriétés de matériau pour les couches individuelles de l'ensemble de couches de feuille de matière plastique empilées non laminées (1) et/ou pour le dispositif de couches de feuille de matière plastique empilées non laminées (6).

3. Procédé selon la revendication 1 ou 2, **caractérisé en ce que** la détermination des données de paramètres de processus au moyen du modèle de matériau comprend en outre :
- la détermination d'une classe de matériau, en associant, dans le cadre d'une classification au moyen du modèle de matériau (5), une ou plusieurs classes de matériau parmi un groupe de classes de matériau aux données de paramètres de matériau la ou les classes de matériau étant chacune **caractérisées par** une ou plusieurs propriétés de classes de matériau, lesquelles propriétés de classes de matériau sont comparables, lors de la classification, à la ou les propriétés de matériau indiquées par les données de paramètres de matériau ; et
- la détermination des données de paramètres de processus au moyen du modèle de matériau, lequel associe les données de paramètres de processus sur la base de la modélisation de matériau de la ou des classes de matériau.

4. Procédé selon au moins l'une des revendications précédentes, **caractérisé en ce que** la détermination des données de paramètres de processus au moyen du modèle de matériau comprend en outre :
- la détermination d'une classe de matériau, en associant, dans le cadre d'une autre classification au moyen du modèle de matériau (5), une ou plusieurs classes de qualité de matériau parmi un groupe de classes de qualité de matériau aux données de paramètres de matériau la ou les classes de qualité de matériau étant chacune **caractérisées par** une ou plusieurs propriétés de classes de qualité de matériau qui sont comparables, lors de l'autre classification, à la ou les propriétés de matériau indiquées par les données de paramètres de matériau ; et
- la détermination des données de paramètres de processus au moyen du modèle de matériau, lequel associe les données de paramètres de processus sur la base de la modélisation de matériau de la ou des classes de qualité de matériau.

5. Procédé selon au moins l'une des revendications précédentes, **caractérisé en ce que** les étapes suivantes sont prévues en outre :
- association des données de paramètres de processus et/ou des données de commande de machine à un état de consigne du dispositif de couches de feuille de matière plastique laminées (6) après le processus de laminage, l'état de consigne étant **caractérisé par** une ou plusieurs propriétés de matériau de consigne pour le dispositif de couches de feuille de matière plastique laminées (6) ; et
- la détermination visant à établir si, après le processus de laminage, le dispositif des couches de feuille de matière plastique laminées (6) présente la ou les propriétés de matériau de consigne,

6. Procédé selon la revendication 5, **caractérisé en ce qu'**une ou plusieurs propriétés de matériau de consigne comprennent au moins une propriété de matériau optiquement déterminable qui peut être déterminée au moyen d'un dispositif de mesure optique.

7. Procédé selon la revendication 5 ou 6, **caractérisé en ce que** les données de paramètres de processus et/ou les données de commande de machine, toutes associées à l'état de consigne, sont identifiées dans une base de données (4a) comme ne convenant pas au processus de laminage du dispositif de couches de feuille de matière plastique empilées non laminées comportant les données de paramètres de matériau, si lors de la détermination il est constaté qu'après le processus de laminage, le dispositif des couches de feuille de matière plastique laminées (6) ne présente pas la ou les propriétés de matériau de consigne.

8. Procédé selon au moins l'une des revendications 5 à 7, **caractérisé en ce que** les données de paramètres de processus et/ou les données de commande de machine, toutes associées à l'état de consigne, sont modifiées dans la base de données (4a) afin d'obtenir l'état de consigne lors d'un futur processus de laminage pour un autre dispositif de couches de feuille de matière plastique empilées non laminées comportant les données de paramètres de matériau, si lors de la détermination il est constaté qu'après le processus de laminage, le dispositif de couches de feuille de matière plastique laminées (6) ne présente pas la ou les propriétés de matériau de consigne.

9. Procédé selon au moins l'une des revendications précédentes, **caractérisé en ce que** la détermination des données de paramètres de processus au moyen du modèle de matériau (5) comprend une association des données de paramètres de processus aux données de paramètres de matériau sur la base d'une modélisation de matériau.

10. Procédé selon au moins l'une des revendications précédentes, **caractérisé en ce que** la détermination des données de commande de machine au moyen du modèle de machine (7) comprend une association des données de commande de machine aux données de paramètres de processus sur la base d'une modélisation de machine.

11. Appareil de fabrication d'un dispositif de couches de feuille de matière plastique laminées (6) pour un corps de type carte en matière plastique à partir d'un dispositif de couches de feuille de matière plastique empilées non laminées (1), l'appareil étant configuré de manière à exécuter un procédé de fabrication selon au moins l'une des revendications précédentes.
